# EUROPEAN PATENT SPECIFICATION

(11) **EP 1 750 021 B1**
(45) Date of publication and mention of the grant of the patent: **14.01.2009**
(21) Application number: 06118494.1
(22) Date of filing: 04.08.2006
(51) Int. Cl.: F16B 37/08, E03D 11/14

(54) **Sanitary fixture installation structure with an adjustable fastening device**
Sanitäranlagenstruktur mit einer einstellbaren Befestigungsvorrichtung
Structure d'équipement sanitaire avec un dispositif de fixation réglable

(30) Priority: 05.08.2005 IT MI20051551
(43) Date of publication of application: 07.02.2007
(73) Proprietor: Oliveira & Irmao S.A., 3800 Aveiro (PT)
(72) Inventor: Moura de Oliveira, Antonio Manuel, 3800-25 Aveiro (PT)
(74) Representative: Jorio, Paolo

(56) References cited:
- FR-A1- 2 643 027
- US-A- 4 830 560

## Description

The present invention relates to a sanitary fixture installation structure provided with an adjustable fastening device, for fixing the structure to a wall.

A structure with a device for wall-mounting it is known from EP-A-1260639, and its device comprises a threaded connecting rod, which is inserted through a portion of the installation structure and engages a seat in a fastening member fixed to the wall. The rod slides freely inside the fastening member, and is secured to the fastening member by a threaded U-bolt transversely engaging the rod, so that the distance between the installation structure and the wall can first be adjusted roughly (by sliding the rod inside the fastening member) and then fine-adjusted by screwing the connecting rod inside the U-bolt.

Though efficient, the above device leaves room for improvement in various respects, and particularly as regards easy, low-cost manufacture, and fast, troublefree installation.

Other known systems, more or less similar to the one described above but not specifically foreseen, for being used with a sanitary fixture installation structure, are also fairly complicated and expensive to produce, or are relatively difficult and time-consuming to install and adjust.

For example, US-A-4830560 and FR-A-2643027 disclose fastening devices wherein a threaded connecting rod is inserted into a seat defined by threaded portions of a fastening member, and a lock member is movable by rotation to cooperate with the threaded portions to cause the threaded portions to engage or release the rod.

It is therefore an object of the present invention to provide a sanitary fixture installation structure with an adjustable fastening device, by which the installation structure can be mounted and the distance between the installation structure and the wall adjusted quickly and easily, and which at the same time is straightforward, strong, and cheap to produce.

According to the present invention, there is provided a sanitary fixture installation structure as defined by claim 1.

The structure according to the invention is thus extremely cheap and easy to produce and install, permits fast, easy adjustment of the distance between the installation structure and the wall, and in particular permits fast rough adjustment as well as fine adjustment.

A non-limiting embodiment of the present invention will be described by way of example with reference to the accompanying drawings, in which:
Figure 1 shows a schematic exploded view of an adjustable fastening device for wall-mounting a sanitary fixture installation structure, in accordance with the invention;
Figure 2 shows an exploded view of a detail of the Figure 1 device;
Figures 3 and 4 show schematic cross sections illustrating operation of the Figure 1 device.

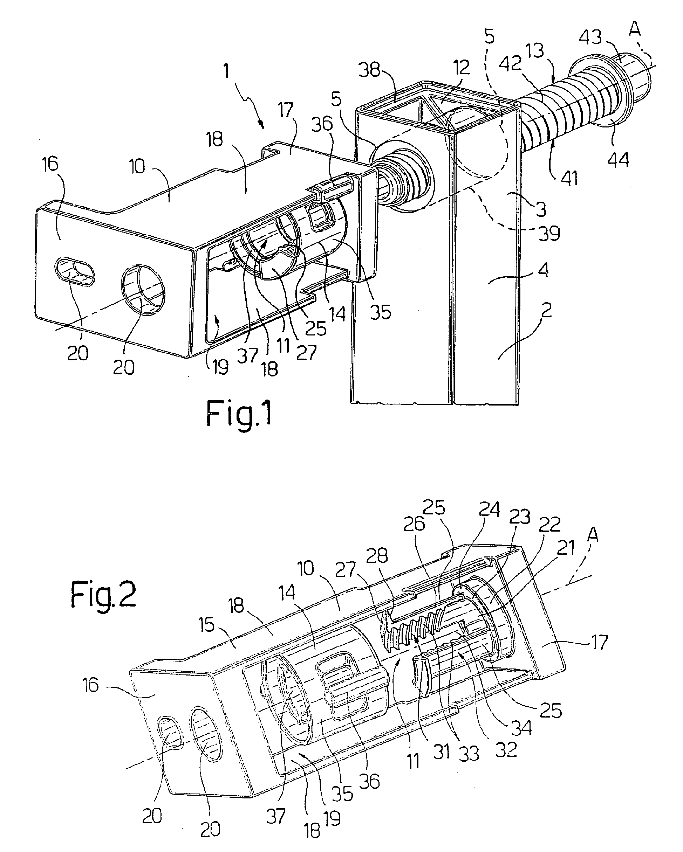

Number 1 in Figure 1 indicates as a whole an adjustable fastening device for wall-mounting a sanitary fixture installation structure 2.

Structure 2 is known and therefore not described or illustrated in detail for the sake of simplicity; Figure 1 shows only an end portion 3 of an upright 4 forming part of structure 2; upright 4 is hollow, and portion 3 has two aligned holes 5.

Device 1 comprises a fastening member 10, which is fixed to a wall and has a seat 11 extending along an axis A; a supporting member 12 insertable inside portion 3 of structure 2; a connecting rod 13 inserted, through supporting member 12 and portion 3, inside seat 11 along axis A; and a lock member 14.

With reference also to Figure 2, fastening member 10 comprises a bracket-like body 15 made, for example, of plastic and having two facing opposite end walls 16, 17, and two parallel side walls 18 substantially perpendicular to walls 16, 17 and defining, together with walls 16, 17, an inner cavity 19. Wall 16 has holes 20 for wall-mounting screws (or other members).

Wall 17 has a through opening 21 defining a first portion of seat 11; and a collar 22, which projects from wall 17 into cavity 19 towards wall 16 and parallel to axis A, and has a front edge 23 defining an axial shoulder 24.

Two or more flexible arms 25 project parallel to axis A from edge 23, are spaced circumferentially about axis A, and curve about axis A to define a second portion of seat 11. In the example shown in the attached drawings, two facing, diametrically opposite arms 25 are provided.

Arms 25 are preferably formed in one piece with fastening member 10 and collar 22. By virtue of projecting from collar 22, being elongated longitudinally, and being made of plastic, arms 25 are radially flexible, in the sense that they can be flexed to and from each other radially with respect to axis A, and return to the original undeformed configuration when released.

Arms 25 terminate with respective free ends 26 having respective radially outer teeth 27, which have respective axial shoulders 28 facing edge 23 of collar 22.

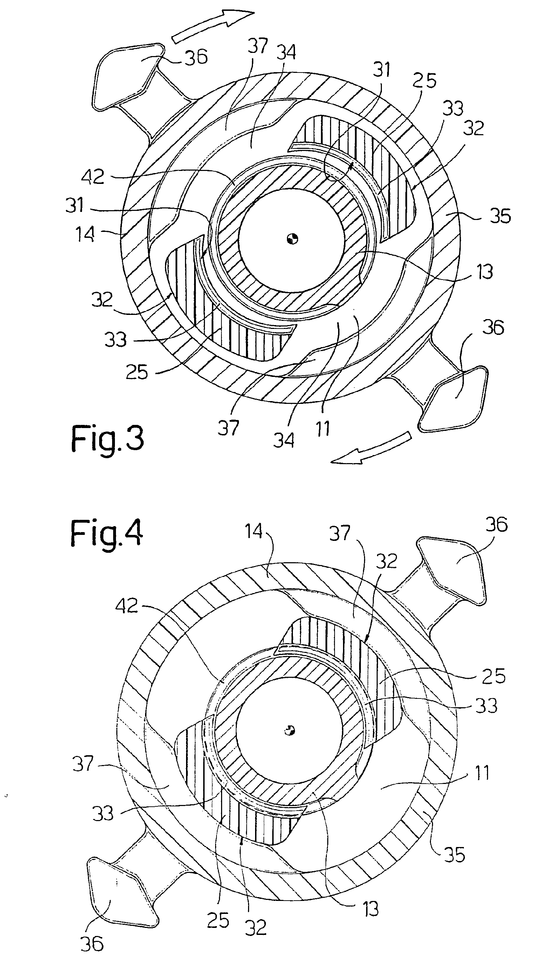

With reference also to Figure 3, each arm 25 curves about axis A, and is bounded by a radially inner surface 31 and a radially outer surface 32 coaxial with each other. Close to ends 26, arms 25 have respective radially inner, threaded portions 33 formed facing each other on surfaces 31; and arms 25 are separated by gaps 34 parallel to axis A.

Lock member 14 is fitted radially outwards onto arms 25, and slides about axis A on surfaces 32. More specifically, lock member 14 comprises a cylindrical sleeve 35 fitted onto arms 25 and secured axially to arms 25 between opposite shoulders 24 and 28. Sleeve 35 comprises two radially outer manoeuvring portions 36; and radially inner appendixes 37 - in the example shown, two diametrically opposite appendixes 37 - shaped to fit inside gaps 34 or to cooperate with arms 25, as explained below.

Supporting member 12 (Figure 1) comprises a block 38 of plastic material, inserted inside portion 3 of upright 4 and having an inner through cavity 39 (only shown schematically in Figure 1) for housing rod 13.

Rod 13 comprises a cylindrical stem 41 having an external thread 42; and a head 43 manoeuvred manually or by means of an appropriate tool, and having a flange 44. Rod 13 is inserted through portion 3, inside cavity 39 of supporting member 12, and into seat 11.

As shown in Figures 3 and 4, lock member 14 rotates about axis A to selectively assume:
- an open position (Figure 3), in which appendixes 37 are inserted inside gaps 34, lock member 14 does not push arms 25 onto rod 13, arms 25 are undeformed so that threaded portions 33 do not engage thread 42 on rod 13, and rod 13 slides freely inside seat 11 along axis A;
- a closed position (Figure 4), in which lock member 14, by means of appendixes 37, pushes arms 25 onto rod 13, and threaded portions 33 engage thread 42 on rod 13, which is therefore screwed inside seat 11 by thread 42.

Lock member 14 therefore cooperates with arms 25 to grip arms 25 radially against rod 13 or to release arms 25 from rod 13, by causing threaded portions 33 to engage or release thread 42 on rod 13 respectively.

Device 1 operates as follows.

With supporting member 12 housed inside portion 3 of upright 4 (Figure 1), rod 13 is inserted through cavity 39 and holes 5, so that flange 44 rests against a stop surface of supporting member 12 (in known manner not shown).

Lock member 14 is fitted onto arms 25 in the open position, with appendixes 37 inside gaps 34, i.e. between arms 25 (Figures 1 and 3), so that rod 13 can be inserted inside seat 11 and, by sliding freely with respect to fastening member 10 inside seat 11, can be set quickly to the desired position with respect to fastening member 10 for a rough adjustment of the distance between structure 2 and the wall to which fastening member 10 is to be fixed.

Once the desired distance between structure 2 and the wall is established, lock member 14, using manoeuvring portions 36, is rotated (90° in the example) about axis A into the closed position (Figure 4), and pushes arms 25 onto rod 13 so that threaded portions 33 of arms 25 engage thread 42 on rod 13.

At this point, working on head 43, a fine adjustment of the distance between structure 2 and fastening member 10 (and therefore the distance between structure 2 and the wall to which fastening member is fixed) can be made (by screwing rod 13 inside seat 11).

Clearly, changes may be made to the device as described and illustrated herein without, however, departing from the scope of the accompanying Claims.

## Claims

1. A sanitary fixture installation structure (2) provided witch an adjustable fastening device (1), for fixing the structure to a wall, the device (1) comprising: a fastening member (10) comprising a bracket-like body (15) having holes (20) for wall-mounting screws or other members and having a seat (11) extending along an axis (A); a supporting member (12) insertable inside a portion (3) of the structure (2); a connecting rod (13) comprising a cylindrical stem (41) having an external thread (42), and a head (43) having a flange (44); the connecting rod (13) being slidable along said axis, through the supporting member 12 and the portion 3, inside the seat; and a lock member (14);
the seat (11) comprising threaded portions (33) associated with the lock member (14), which cooperates with the threaded portions to cause the threaded portions (33) to engage or release the thread (42) on the rod (13); the lock member (14) being fitted radially outwards onto the threaded portions (33), and rotating about said axis (A);
the lock member (14) having radially inner appendixes (37), which cooperate with the threaded portions (33) to push the threaded portions (33) onto the rod (13) and are made to cooperate with the threaded portions (33) by rotation of the lock member (14) about said axis (A); the seat (11) having axial gaps (34) in which the appendixes (37) are insertable to allow the rod (13) to slide freely inside the seat (11).

2. An installation structure as claimed in Claim 1, **characterized in that** the lock member (14) is movable to selectively assume an open position, wherein the lock member (14) does not cooperate with the threaded portions (33), and the rod (13) slides freely inside the seat (11) along said axis (A); and a closed position, wherein the lock member (14) pushes the threaded portions (33) onto the rod (13), and the rod (13) is screwed inside the seat (11) by the thread (42).

3. An installation structure as claimed in Claim 2, **characterized in that** the lock member (14) rotates about said axis (A) to selectively assume the open position and the closed position.

4. An installation structure as claimed in one of the foregoing Claims, **characterized in that** the threaded portions (33) are carried by respective flexible arms (25) projecting from the fastening member (10).

5. An installation structure as claimed in one of the foregoing Claims, **characterized in that** the seat (11) is defined by two or more flexible arms (25) having respective threaded portions (33), and which project, parallel to said axis (A), from the fastening member (10), and are spaced circumferentially about said axis (A) .

6. An installation structure as claimed in Claim 4 or 5, **characterized in that** the seat (11) is defined by at least two facing, diametrically opposite arms (25) projecting, parallel to said axis (A), from a collar (22) of the fastening member (10); the rod (13) being inserted through the collar (22) and between the arms (25).

7. An installation structure as claimed in one of Claims 4 to 6, **characterized in that** the lock member (14) cooperates with the arms (25) to grip the arms (25) radially against the rod (13), or to release the arms (25) from the rod (13).

## Patentansprüche

1. Sanitäranlagenstruktur (2), die mit einer einstellbaren Befestigungsvorrichtung (1) zum Befestigen der Struktur an einer Wand versehen ist, wobei die Vorrichtung (1) umfasst: ein Befestigungsglied (10), das einen klammernähnlichen Hauptteil (15) mit Löchern (20) für Wandmontageschrauben oder andere Glieder umfasst und ein Auflager bzw. einen Sitz (11) hat , der sich entlang einer Achse (A) erstreckt; ein Halteglied (12), das ins Innere eines Abschnitts (3) der Struktur (2) einsetzbar ist; eine Verbindungsstange (13), die einen zylinderförmigen Schaft (41) mit einem Außengewinde (42), und einen Kopf (43) mit einem Flansch (44) umfasst; wobei die Verbindungsstange (13) entlang der Achse durch das Halteglied (12) und den Abschnitt (3) im Inneren des Sitzes verschiebbar ist; und ein Arretier- bzw. Sperrglied (14);
wobei der Sitz (11) Gewindeabschnitte (33) umfasst, die zu dem Sperrelement (14) gehören, welches mit den Gewindeabschnitten zusammenwirkt, um zu bewirken, dass die Gewindeabschnitte (33) in das Gewinde (42) auf der Stange (13) eingreifen oder sich von ihm lösen; wobei das Sperrglied (14) radial auswärts auf den Gewindeabschnitten eingepasst ist und um die Achse (A) rotiert;
wobei das Arretierglied radial innere Ansätze (37) hat, die mit den Gewindeabschnitten (33) zusammenwirken, um die Gewindeabschnitte (33) auf die Stange (33) zu schieben, und dazu gebracht werden, durch Rotation des Sperrglieds (14) um die Achse (A) mit den Gewindeabschnitten (33) zusammenzuwirken; der Sitz (11) axiale Lücken (34) hat, in welche die Ansätze (37) einsetzbar sind, um der Stange (13) zu erlauben, frei im Inneren des Sitzes (11) zu gleiten.

2. Anlagenstruktur nach Anspruch 1, **dadurch gekennzeichnet, dass** das Sperrglied (14) bewegbar ist, um selektiv eine offene Position einzunehmen, in der das Sperrglied (14) nicht mit den Gewindeabschnitten (33) zusammenwirkt und die Stange (13) frei im Inneren des Sitzes (11) entlang der Achse (A) gleitet; und eine geschlossene Position, in der das Sperrglied (14) die Gewindeabschnitte (33) auf die Stange (13) schiebt und die Stange (13) durch das Gewinde (42) ins Innere des Sitzes (11) geschraubt wird.

3. Anlagenstruktur nach Anspruch 2, **dadurch gekennzeichnet, dass** das Sperrglied (14) um die Achse (A) rotiert, um selektiv die offene Position und die geschlossene Position einzunehmen.

4. Anlagenstruktur nach einem der vorangehenden Ansprüche, **dadurch gekennzeichnet, dass** die Gewindeabschnitte (33) von jeweiligen flexiblen Armen (25) getragen werden, die von dem Befestigungsglied (10) vorstehen.

5. Anlagenstruktur nach einem der vorangehenden Ansprüche, **dadurch gekennzeichnet, dass** der Sitz (11) durch zwei oder mehr flexible Arme (25) mit jeweiligen Gewindeabschnitten (33) begrenzt bzw. definiert ist, die parallel zu der Achse (A) von dem Befestigungsglied (10) vorstehen und ringsum um die Achse (A) beabstandet sind.

6. Anlagenstruktur nach Anspruch 4 oder 5, **dadurch gekennzeichnet, dass** der Sitz (11) durch wenigstens zwei einander zugewandte diametral entgegengesetzte Arme (25), die von einer Manschette (22) des Befestigungsglieds (10) parallel zu der Achse (A) vorstehen, definiert ist; die Stange (13) durch die Manschette (22) und zwischen den Armen (25) eingesetzt ist.

7. Anlagenstruktur nach einem der Ansprüche 4 bis 6, **dadurch gekennzeichnet, dass** das Sperrglied (14) mit den Armen (25) zusammenwirkt, um die Arme (25) radial gegen die Stange (13) zu greifen oder die Arme (25) von der Stange (13) zu lösen.

## Revendications

1. Structure d'installation d'équipement sanitaire (2) pourvue d'un dispositif de fixation (1) ajustable pour fixer la structure à une paroi, le dispositif (1) comprenant : un élément de fixation (10) comprenant un corps de type support (15) comportant des trous (20) pour des vis ou d'autres éléments de montage sur une paroi et comportant un siège (11) s'étendant le long d'un axe (A) ; un élément de support (12) pouvant être inséré à l'intérieur d'une partie (3) de la structure (2) ; une tige de liaison prenant une tige cylindrique (41) comportant un filetage externe (42) et une tête (43) comportant un rebord (44) ; la tige de liaison étant capable de coulisser le long dudit axe, à travers l'élément de support 12 et la partie 3, à l'intérieur du siège ; et un élément de blocage (14) ;
le siège (11) comprenant des parties filetées (33) associées à l'élément de blocage (14), qui coopère avec les parties filetées pour amener les parties filetées (33) à venir en prise avec le filetage (42) sur la tige (13) ou à se séparer de celui-ci ; l'élément de blocage (14) étant monté radialement vers l'extérieur sur les parties filetées (33), et tournant autour dudit axe (A) ;
l'élément de blocage (14) comportant des appendices (37) radialement internes, qui coopèrent avec les parties filetées (33) pour pousser les parties filetées (33) sur la tige (13) et qui sont réalisés pour coopérer avec les parties filetées (33) par rotation de l'élément de blocage (14) autour dudit axe (A) ; le siège (11) comportant des espaces axiaux (34) dans lesquels les appendices (37) peuvent être insérés pour permettre à la tige (13) de coulisser librement à l'intérieur du siège (11).

2. Structure d'installation selon la revendication 1, **caractérisée en ce que** l'élément de blocage (14) peut être déplacé pour adopter de manière sélective une position ouverte, dans laquelle l'élément de blocage (14) ne coopère pas avec les parties filetées (33), et la tige (13) coulisse librement à l'intérieur du siège (11) le long dudit axe (A) ; et une position fermée, dans laquelle l'élément de blocage (14) pousse les parties filetées (33) sur la tige (13), et la tige (13) est vissée à l'intérieur du siège (11) par le filetage (42).

3. Structure d'installation selon la revendication 2, **caractérisée en ce que** l'élément de blocage (14) tourne autour dudit axe (A) pour adopter de manière sélective la position ouverte et la position fermée.

4. Structure d'installation selon l'une des revendications précédentes, **caractérisée en ce que** les parties filetées (33) sont supportées par des bras (25) flexibles respectifs faisant saillie de l'élément de fixation (10).

5. Structure d'installation selon l'une des revendications précédentes, **caractérisée en ce que** le siège (11) est défini par deux bras (25) flexibles ou plus comportant des parties filetées (33) respectives, et qui font saillie, parallèlement audit axe (A), de l'élément de fixation (10), et sont espacés circonférentiellement autour dudit axe (A).

6. Structure d'installation selon la revendication 4 ou 5, **caractérisée en ce que** le siège (11) est défini par au moins deux bras (25) diamétralement opposés se faisant face qui font saillie, parallèlement audit axe (A), d'un collier (22) de l'élément de fixation (10) ; la tige (13) étant insérée à travers le collier (22) et entre les bras (25).

7. Structure d'installation selon l'une des revendications 4 à 6, **caractérisée en ce que** l'élément de blocage (14) coopère avec les bras (25) pour serrer les bras (25) radialement contre la tige (13), ou pour libérer les bras (25) de la tige (13).
